# EUROPEAN PATENT SPECIFICATION

(11) **EP 2 210 785 B1**
(45) Date of publication and mention of the grant of the patent: **03.08.2011**
(21) Application number: 09425012.3
(22) Date of filing: 22.01.2009
(51) Int. Cl.: B60R 21/0136

(54) **Distributed system for the electronic activation of airbags**
Verteiltes System für die elektronische Aktiviering von Airbags
Système répartit pour l'activation électronique des coussins gonflables

(43) Date of publication of application: 28.07.2010
(73) Proprietor: Fiat Group Automobiles S.p.A., 10135 Torino (TO) (IT)
(72) Inventor: Nicastro, Pietro, 10135 Torino (IT); Pazzanese, Antonello, 10135 Torino (IT)
(74) Representative: Notaro, Giancarlo

(56) References cited:
- EP-A- 1 104 135
- DE-A1- 19 740 021

## Description

The present invention refers to systems for the electronic activation of airbags in a motor vehicle. An airbag is a passive automobile safety device that can be installed on a motor vehicle to protect the driver and/or the passengers from impacts in case of an accident. In more detail, an airbag is an anti-impact "inflatable cushion" of synthetic material that is instantly inflatable in the case in which a corresponding sensor detects a violent impact of the motor vehicle. Its fundamental function is that of preventing contact of the head (and/or other parts of the body) of the driver and/or passengers with parts of the motor vehicle. In fact, even if the body is held by the safety belt, the head remains free to move during the impact.

In addition to airbags for the forward positions (driver and passenger), airbags for the rear positions also exist, that deploy from the backs of the forward seats, side airbags that deploy from the doors, and overhead or window airbags that deploy from mountings over the door openings. The diverse types of airbags are distinguished, not only by the shapes and dimensions of their "cushion", but also by the different calibration and dispositions of the sensors that activate them. Generally, the airbags for the forward and rear positions have their sensor disposed at the base of the windshield, while the lateral airbags have their sensor in the frame under the door.

Various types of airbags exist on the market, and the most commonly used are the hybrid airbags and the pyrotechnic airbags. Hybrid airbags are faster than pyrotechnic ones and for this reason they are generally used for side airbags and for window airbags where the space between the passenger and the door is limited and the "cushion" must deploy itself as fast as possible. The two types are used interchangeably for the frontal driver and passenger airbags.

A typical system for the activation of an airbag comprises:
- one or more sensors, to detect an abrupt deceleration of the motor vehicle due to an impact, and generate a command signal;
- a processor or Electronic Control Unit (ECU), predisposed to receive and process the command signal output from the sensor and configured to output an ignition command to an activating device;
- an activation device, also known as a detonator or primer, for igniting the substance contained in an explosive capsule, for example sodium azide;
- an explosive capsule, the explosion of which creates a great quantity of gas that inflates the "cushion"; and
- a "cushion", in synthetic, gas-impermeable material, provided with openings in the posterior part to allow for rapid deflation to avoid the risk of suffocation.

Dual-stage airbags also exist that are constituted of a pair of hybrid or pyrotechnic airbags installed in a single cushion. In this case the electronic control unit can choose to active only one pyrotechnic charge and partially inflate the cushion or activate both of them but in different temporal instants. The first case is useful when a child or light weight passenger is present on the seat, since the reduced momentum does not require complete deployment of the cushion. The second case is used to reduce the violence of the impact of the passenger with the cushion.

Motor vehicles in the low-end are usually provided with a limited number of airbags, while high-end vehicles have an elevated number of airbags to maximise passenger safety.

This wide variation in the equipping of different motor vehicles makes standardisation of the electronic control units difficult, therefore requiring the use of different electronic control units on automobiles of different ranges.

Currently, each individual electronic control unit is produced and configured to control the activation of the airbags of a determined model of motor vehicle, and these same can not be mounted on differently equipped vehicles. The architecture adopted to date performs a centralised control of the airbags, that is, all of the airbags present on a vehicle are controlled and activated directly by a single control unit.

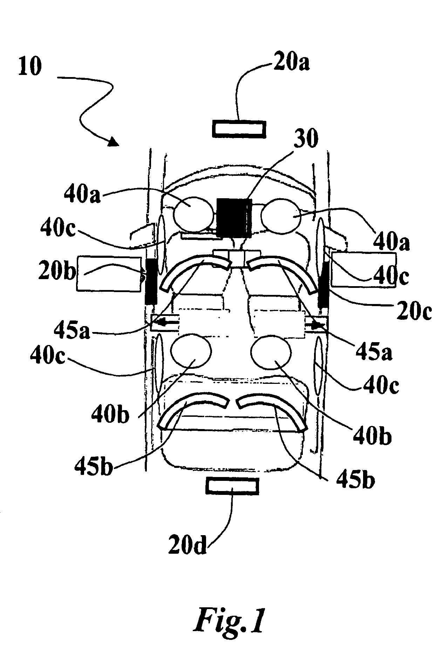

With reference to figure 1, on a vehicle indicated in its entirety with the reference 10 several sensors 20a, 20b, 20c, 20d are installed. These sensors can be either the accelerometric or the pressure type and have the function of detecting the impact, transforming the deformation of the vehicle and therefore the decelerations/accelerations of the surface on which they are mounted into analogue command signals. The command signals are output to an electronic control unit ECU 30 located, in the example illustrated, inside the instrument panel. The sensors are disposed at particular points on the vehicle 10, that is, in the front part 20a, in the rear part 20d, in the lateral parts 20b and 20c. These points are chosen so to render the vehicle "sensitive" to diverse types of impacts.

The electronic control unit 30 functions to process the command signals received from the various sensors 20a, 20b, 20c, 20d and "understand" or determine, through the execution of an algorithm, the severity and type of the impact (frontal, lateral, posterior or a combination of these). The control unit 30 in turn generates a series of activation commands which are output to the activation devices associated with the anterior airbag 40a, posterior airbag 40b, and side airbags 40c, and a series of commands that are transmitted to the anterior 45a and posterior 45b seatbelts.

Therefore, in the case illustrated, the control unit 30 is configured to control both the activation of the airbags and the activation of the safety belts.

The control unit 30 is capable of discriminating the impacts and activating only the elements that are needed. For example, in a frontal impact the electronic control unit 30 activates only the anterior airbags 40a, 40b and the seatbelts 45a and 45b.

In addition, the electronic processing unit can be capable of varying the functioning of the elements, for example the rigidity of the airbag, on the basis of the severity of the impact or on the basis of determined passenger characteristics, but additional sensors are needed to do so.

In some more advanced vehicles a sensor is installed in the passenger seat capable of detecting the presence of a passenger and deactivate the functioning of the airbag on the passenger side when the seat is empty. This serves to reduce costs by avoiding needless activation of an airbag.

Other vehicles allow manual deactivation of the airbag on the passenger side to allow the transport of an infant in an appropriate child seat on the front seat.

In addition, in the case when a multistage airbag is present, the sensor on the passenger seat can generate a signal that varies according to the weight of the person transported, to inflate the airbag more or less violently on the passenger side.

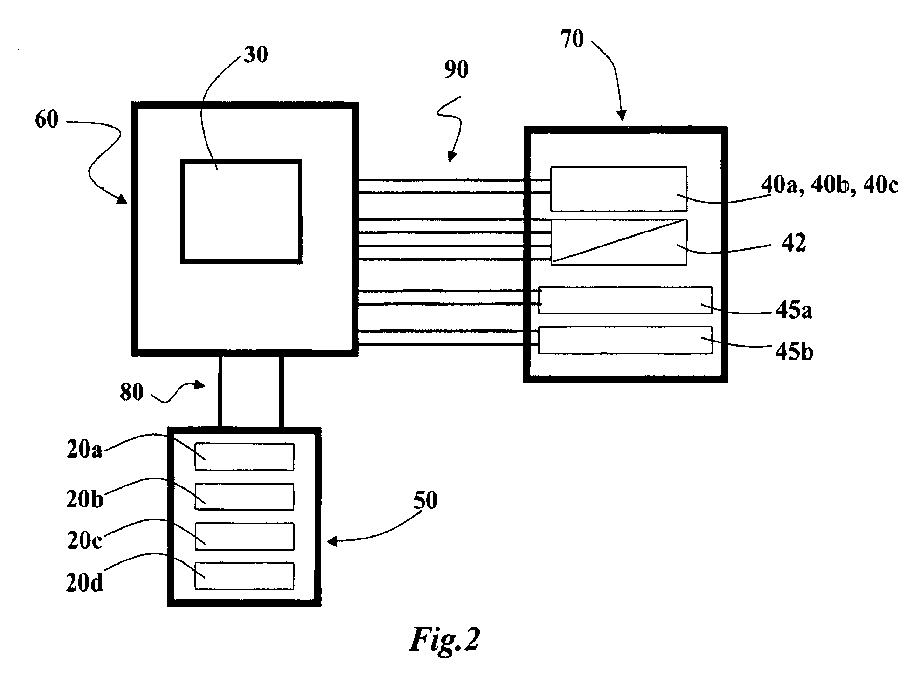

Figure 2 shows an example of a logic scheme of the functioning of an activation system of the airbags and safety belts in a motor vehicle. In particular there is:
- a detection module 50 comprising the various sensors 20a, 20b, 20c, 20d that are disposed on the vehicle 10 and that generate control signals that are transported by cables indicated with reference 80,
- a data processing module 60 comprising the control unit 30, which receives the input control signals 80 generated by the detection module 50, and that generates output command signals that are transported on cables indicated with the reference 90, and
- an activation module 70 that activates the activation devices of the airbags and/or of the seatbelts on the basis of the command signals 90 received from the processing module 60.

In particular the activation module 70 can independently activate the anterior 40a, posterior 40b, side 40c airbags and the anterior 45a and posterior safety belts 45b.

Still referring to figure 2, one can note that the number of cables 90 that exit from the electronic control unit 30 and lead toward the users, that is the airbags and safety belts, depends on two factors:
- the number of elements to supply (number of airbags and seatbelts present on the vehicle), and
- the type of elements to supply (for example the airbag indicated with reference 42 is a dual-stage type airbag and has an additional stage to supply with respect to airbag 40 which is of the single stage type).

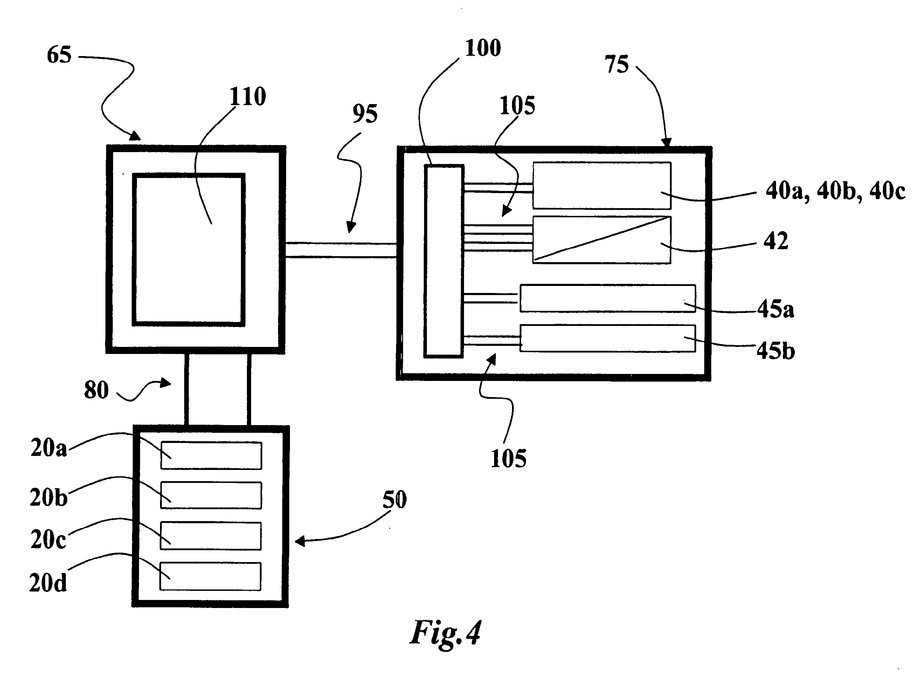

However, the current centralised architecture imposes a great constraint on the design: the hardware of the electronic control unit 30, that is, the number of output channels indicated with reference 90 in figure 4, depends on the choice of the number and type of elements (airbags and seatbelts) present on the particular vehicle. This choice is dictated by the safety objectives and by the equipment selected. This leads to a great lack of standardisation in that a specific electronic control unit exists for every vehicle configuration and these can not be mounted on vehicles provided with different equipment.

Furthermore, with centralised architecture it is not possible to control the addition of other airbags or modify the functioning of the airbags present, since these operations would require also the substitution of the control unit (the modification of function could be, for example, the insertion on a dual-stage type airbag on the driver side of a device with a deflation opening, or with an adaptive-type gas generator that allows variation of cushion rigidity on the basis of impact configuration).

Therefore, a centralised architecture results in a series of limitations and disadvantages.

A distributed system for the activation of the airbags in a motor vehicle according to the preamble of claim 1 is known e.g. from DE 197 40 021 A1.

The object of the present invention it that of realising a distributed system for the electronic activation of airbags that is simple to realise, economical, and that at the same time guarantees maximum flexibility, efficiency, functionality and versatility and that also allows a reduction in the number of cables installed in the vehicle.

To achieve such object the invention has as an objective a distributed system for the electronic activation of airbags having the characteristics indicated in claim 1.

The invention will now be described, by way of non-limiting example only, with reference to the annexed figures and drawings, wherein:

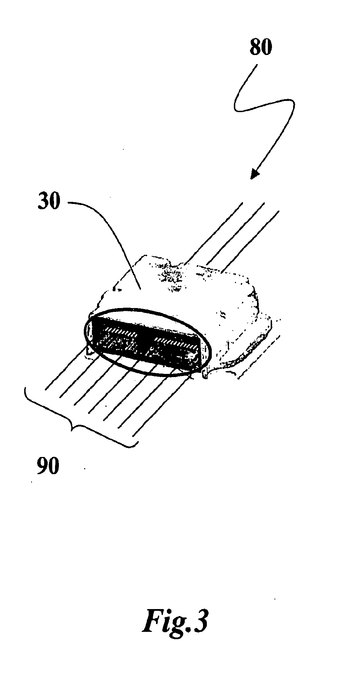

- figures 1 to 3 have already been described above,
- figure 4 shows a logic diagram of the functioning according to the invention,
- figure 5 shows the architecture of one embodiment of the invention, and
- figure 6 shows an example of an embodiment of a detail of figure 5.

The solution proposed herein allows for management of the activation of airbags and safety belts with greater flexibility, reducing the number of cables used by means of the installation of local control stations placed in correspondence to the elements themselves.

Referring to figure 4, one can see that control of the elements (airbags and seatbelts) is no longer centrally managed by the central electronic control unit 110, but is realized by a control unit 100 (Bag Unit) placed in correspondence to the elements themselves.

With this new distributed architecture the standardisation of the electronic control unit 110 is improved, that is, the same electronic processing unit 110 can control configurations with a different number of airbags. Generally, using local control a greater number of elements (airbags or seatbelts) can be controlled.

A significant advantage is obtained from the reduction in the number and length of cables used to wire the system, with consequent reduction in cost.

With reference to figure 4, a data processing module 65 comprises the standard electronic control unit 110. The electronic processing unit 110 is connected to an airbag activation module 75 by means of cables indicated with reference 95, on which the control signals generated by the electronic control unit 110 travel.

In particular the cables 95 connect the electronic control unit 110 with the local control unit 100 which is responsible for the local control of the airbags and the seatbelts. The local unit 100 in turn is directly connected with the activation devices of the airbags 40, 42 and with the seatbelts 45 through the cables 105 that transport the command signals generated by the local management unit 100.

The reason for using distributed-type architecture is represented by the reduction in the number and the length of the cables used and ability to have an electronic processing unit 110 with a fixed and universally standard structure that can be used with any type of vehicle and with any equipment.

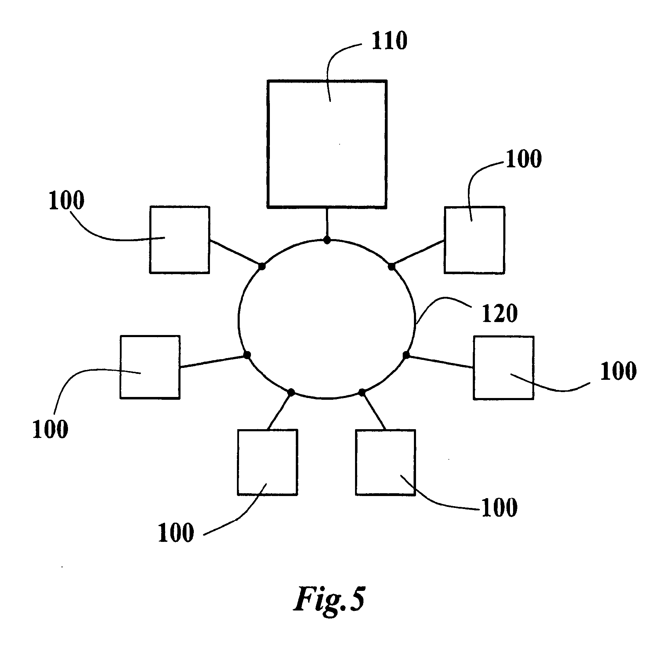

With reference to figure 5, a circular BUS 120 connects a plurality of local control units 100 with the electronic control unit 110. The electronic control unit 110 behaves as a master and all of the local units 100 are slaves. Both a power supply signal and the data destined for each individual local control unit 100 circulate on the BUS 120, which is connected as a loop. The electronic control unit 110 is capable of sending a message to all of the local units 100 in the same instant by sending a message on the BUS 120 (for example during a collision or accident). The protocol of the system of communication between the various units connected to the BUS 120 supports diagnostics of the local units 100.

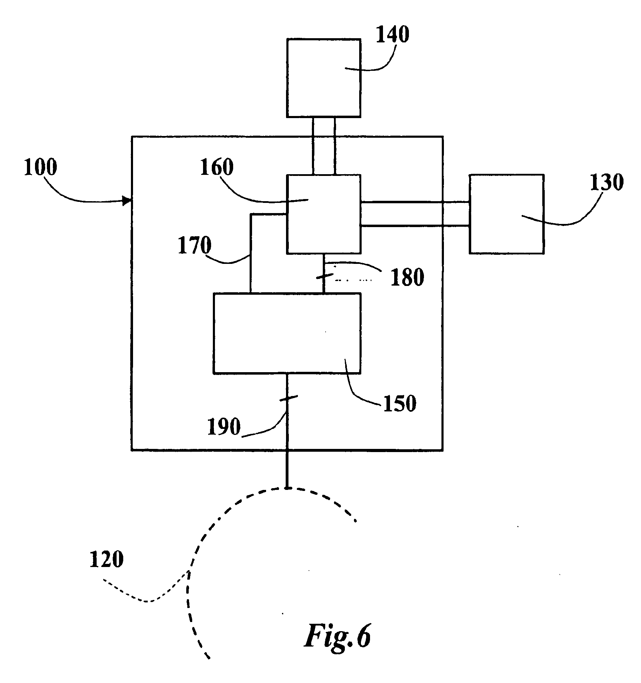

In figure 6 the architecture of a local unit 100 is illustrated. In particular, the signals that circulate on the communications BUS 120 arrive on a cable 190, and a filter 150 has the purpose of separating the power supply signal 170 from the data signal 180. The two separated signals 170 and 180 are used to supply the internal control unit 160 and to control its behaviour, respectively. The internal control unit 160 periodically checks the status of the detonators 130 and 140 and outputs information relative to detonator status on the BUS 120 when asked by the electronic control unit 110.

The electronic control unit 110 independently checks each individual local unit 100 connected to the BUS 120 and is also responsible for:
- recording the information relative to every local unit 100 for diagnostic purposes,
- managing all of the sensors involved in the detection of a collision,
- running all software relative to the event "collision",
- managing all communication with the other internal control units 160 present in the architecture of the network, and
- providing power to every local unit 100, even in reserve energy status.

Each local unit 100 in turn must be able to:
- communicate data to the electronic control unit 110 when it interrogates the local unit 100,
- execute diagnosis of the detonators 130, 140, and
- activate the detonators 130 and 140.

With the aim of achieving maximum advantage, each local unit 100 must be capable of activating two or three different detonators.

Consequently, without prejudice to the underlying principles of the invention, the details and the embodiments may vary, even appreciably, with reference to what has been described by way of non-limiting example without departing from the scope of the invention as defined in the following claims.

## Claims

1. A system for the activation of the airbags (40a, 40b, 40c, 42) in a motor vehicle (10) comprising:
- a plurality of sensors (20a, 20b, 20c and 20d) located on the vehicle (10) for the detection of an impact, wherein said sensors (20a, 20b, 20c and 20d) are configured to transform the deformations of the vehicle (10) into control signals (80),
- an electronic control unit (30, 110) predisposed to receive and process the control signals (80) generated by the sensors (20a, 20b, 20c and 20d), wherein said electronic control unit (30, 110) is configured to generate command signals (90, 95), and
- a plurality of activation devices (130, 140) associated with the airbags (40a, 40b, 40c, 42) and plurality of local control units, wherein the system comprises also at least one local control unit (100) connected between said electronic control unit (110) and said activation devices (130, 140), wherein said local control unit (100) is configured to generate the command signals (105) for the activation of the above-said activation devices (130, 140) of the airbags on the basis of the command signals (90, 95), and
**characterized in that** each local control unit (100) is capable of activating two or three different activation devices (130, 140).

2. The system for the activation of airbags according claim 1, **characterised in that** the system comprises a plurality of local control units (100) connected together by means of a communications BUS (120) to which the above-said electronic control unit (110) is also connected, to realise a distributed control of the activation devices (130, 140) associated with the airbags (40a, 40b, 40c, 42).

3. The system for the activation of airbags according claim 2, **characterised in that** the system has a master/slave architecture wherein the electronic control unit (110) is the master and the local control units (100) are the slaves, and the electronic control unit (110) independently controls each individual local unit (100) connected to the BUS (120).

4. The system for the activation of airbags according claim 3, **characterised in that** the protocol for the communication system between the various units connected to the BUS (120) supports the diagnosis of the local control units (100).

5. The system for the activation of airbags according claim 4, **characterised in that** the communications BUS (120) transports both a power supply signal and the data destined to each individual local control unit (100).

6. The system for the activation of airbags according claim 5, **characterised in that** each local control unit (100) comprises:
- a filter (150) for the purpose of separating the power supply signal (170) from the data signals (180),
- an internal control unit (160), supplied by the above said power (170) and data (180) signals, wherein said internal control unit (160) periodically checks the status of the activation devices (130, 140) and, upon interrogation by the electronic control unit (110), sends the information relative to the status of the activation devices (130, 140) on the communication BUS (120).

7. The system for the activation of airbags according claim 6, **characterised in that** the central unit (110) is also configured for:
- recording the information relative to each local unit (100) for diagnostic purposes,
- managing the sensors (20a, 20b, 20c and 20d) involved in the detection of a collision,
- executing an algorithm relative to the event "collision",
- managing communications with the other internal control units (160) present in the architecture of the system, and
- providing the power supply to each local unit (100), even when low on energy.

8. The system for the activation of airbags according claim 6 or claim 7, **characterised in that** each local unit (100) is also configured for:
- communicating data to the electronic control unit (110) when it makes an interrogation of the local unit (100),
- performing diagnostics of the associated activation devices (130, 140), and
- activating the associated activation devices (130, 140).

## Patentansprüche

1. System für die Aktivierung von Airbags (40a, 40b, 40c, 42) in einem Kraftfahrzeug (10), enthaltend:
- eine Vielzahl von Sensoren (20a, 20b, 20c und 20d), die sich an dem Fahrzeug (10) für die Erfassung eines Aufpralls befinden, wobei die Sensoren (20a, 20b, 20c und 20d) dazu eingerichtet sind, die Verformung des Fahrzeugs (10) in Steuersignale (80) umzuwandeln,
- eine elektronische Steuereinheit (30, 110), die dazu eingerichtet ist, die Steuersignale (80), die von den Sensoren (20a, 20b, 20c und 20d) erzeugt werden, zu empfangen und zu verarbeiten, wobei die elektronische Steuereinheit (30, 110) derart beschaffen ist, dass sie Befehlssignale (90, 95) erzeugt, und
- eine Vielzahl von Aktivierungsvorrichtungen (130, 140), die den Airbags (40a, 40b, 40c, 42) zugeordnet sind, und eine Vielzahl lokaler Steuereinheiten, wobei das System zudem wenigstens eine lokale Steuereinheit (100) enthält, die zwischen die elektronische Steuereinheit (110) und die Aktivierungsvorrichtungen (130, 140) geschaltet ist, wobei die lokale Steuereinheit (100) dazu eingerichtet ist, die Befehlssignale (105) für die Aktivierung der oben erwähnten Aktivierungsvorrichtungen (130, 140) der Airbags auf der Basis der Befehlssignale (90, 95) zu erzeugen, und
**dadurch gekennzeichnet, dass** jede lokale Steuereinheit (100) in der Lage ist, zwei oder drei unterschiedliche Aktivierungsvorrichtungen (130, 140) zu aktivieren.

2. System für die Aktivierung von Airbags nach Anspruch 1, **dadurch gekennzeichnet, dass** das System eine Vielzahl lokaler Steuereinheiten (100) enthält, die mit Hilfe eines Kommunikations-BUS (120) verbunden sind, an den ebenfalls die oben erwähnte elektronische Steuereinheit (110) angeschlossen ist, um eine verteilte Steuerung der Aktivierungsvorrichtungen (130, 140) zu realisieren, die den Airbags (40a, 40b, 40c, 42) zugeordnet sind.

3. System für die Aktivierung von Airbags nach Anspruch 2, **dadurch gekennzeichnet, dass** das System eine Master-/Slave-Architektur hat, bei der die elektronische Steuereinheit (110) der Master ist und die lokalen Steuereinheiten (100) die Slaves sind und die elektronische Steuereinheit (110) jede einzelne lokale Einheit (100), die mit dem BUS (120) verbunden ist, unabhängig steuert.

4. System für die Aktivierung von Airbags nach Anspruch 3, **dadurch gekennzeichnet, dass** das Protokoll für das Kommunikationssystem zwischen den unterschiedlichen Einheiten, die mit dem BUS (120) verbunden sind, die Diagnose der lokalen Steuereinheiten (100) unterstützt.

5. System für die Aktivierung von Airbags nach Anspruch 4, **dadurch gekennzeichnet, dass** der Kommunikations-BUS (120) sowohl ein Stromversorgungssignal als auch die Daten transportiert, die für jede einzelne lokale Steuereinheit (100) bestimmt sind.

6. System für die Aktivierung von Airbags nach Anspruch 5, **dadurch gekennzeichnet, dass** jede lokale Steuereinheit (100) enthält:
- ein Filter (150) zum Zweck des Trennens des Stromversorgungssignals (170) von den Datensignalen (180),
- eine interne Steuereinheit (160), die mit den obigen Strom- (170) und Datensignalen (180) versorgt wird, wobei die interne Steuereinheit (160) periodisch den Zustand der Aktivierungsvorrichtungen (130, 140) prüft und bei Abfrage durch die elektronische Steuereinheit (110) die Informationen, die sich auf den Zustand der Aktivierungsvorrichtungen (130, 140) beziehen, über den Kommunikations-BUS (120) sendet.

7. System für die Aktivierung von Airbags nach Anspruch 6, **dadurch gekennzeichnet, dass** die zentrale Einheit (110) zudem eingerichtet ist für:
- das Aufzeichnen der Informationen, die sich auf jede lokale Einheit (100) beziehen, zu Diagnosezwecken,
- das Verwalten der Sensoren (20a, 20b, 20c und 20d), die bei der Erfassung einer Kollision beteiligt sind,
- das Ausführen eines Algorithmus', der sich auf das Ereignis "Kollision" bezieht,
- das Verwalten von Kommunikationen mit anderen internen Steuereinheiten (160), die in der Architektur des Systems vorhanden sind, und
- das Bereitstellen der Stromversorgung zu jeder logischen Einheit (100), selbst dann, wenn sie eine geringe Energie hat.

8. System für die Aktivierung von Airbags nach Anspruch 6 oder 7, **dadurch gekennzeichnet, dass** jede lokale Einheit (100) zudem eingerichtet ist für:
- die Übermittlung von Daten zu der elektronischen Steuereinheit (110), wenn sie eine Anfrage an die lokale Einheit (100) richtet,
- Ausführen von Diagnosen an den zugeordneten Aktivierungsvorrichtungen (130, 140) und
- Aktivieren der zugeordneten Aktivierungsvorrichtungen (130, 140).

## Revendications

1. Système pour l'activation des coussins gonflables (40a, 40b, 40c, 42) dans un véhicule à moteur (10) comprenant :
- une pluralité de capteurs (20a, 20b, 20c et 20d) se trouvant sur le véhicule (10) pour la détection d'un impact, lesdits capteurs (20a, 20b, 20c et 20d) étant configurés pour transformer les déformations du véhicule (10) en signaux de commande (80),
- une unité de commande électronique (30, 110) prédisposée à recevoir et traiter les signaux de commande (80) générés par les capteurs (20a, 20b, 20c et 20d), ladite unité de commande électronique (30, 110) étant configurée pour générer des signaux de commande (90, 95), et
- une pluralité de dispositifs d'activation (130, 140) associés aux coussins gonflables (40a, 40b, 40c, 42) et une pluralité d'unités de commande locales,
le système comprenant également au moins une unité de commande locale (100) connectée entre ladite unité de commande électronique (110) et lesdits dispositifs d'activation (130, 140), ladite unité de commande locale (100) étant configurée pour générer les signaux de commande (105) pour l'activation des dispositifs d'activation (130, 140) susmentionnés des coussins gonflables sur la base des signaux de commande (90, 95), et
**caractérisé en ce que** chaque unité de commande locale (100) est capable d'activer deux ou trois dispositifs d'activation (130, 140) différents.

2. Système pour l'activation de coussins gonflables selon la revendication 1, **caractérisé en ce que** le système comprend une pluralité d'unités de commande locales (100) connectées ensemble au moyen d'un BUS de communications (120) auquel l'unité de commande électronique (110) susmentionnée est également connectée, pour réaliser une commande répartie des dispositifs d'activation (130, 140) associés aux coussins gonflables (40a, 40b, 40c, 42).

3. Système pour l'activation de coussins gonflables selon la revendication 2, **caractérisé en ce que** le système a une architecture maître/esclave dans laquelle l'unité de commande (110) est le maître et les unités de commande locales (100) sont les esclaves, et l'unité de commande électronique (110) commande indépendamment chaque unité locale (100) individuelle connectée au BUS (120).

4. Système pour l'activation de coussins gonflables selon la revendication 3, **caractérisé en ce que** le protocole pour le système de communication entre les diverses unités connectées au BUS (120) supporte le diagnostic des unités de commande locales (100).

5. Système pour l'activation de coussins gonflables selon la revendication 4, **caractérisé en ce que** le BUS de communications (120) transporte à la fois un signal d'alimentation et les données destinées à chaque unité de commande locale (100) individuelle.

6. Système pour l'activation de coussins gonflables selon la revendication 5, **caractérisé en ce que** chaque unité de commande locale (100) comprend :
- un filtre (150) destiné à séparer le signal d'alimentation (170) des signaux de données (180),
- une unité de commande interne (160), alimentée par les signaux d'alimentation (170) et de données (180) susmentionnés, ladite unité de commande interne (160) contrôlant périodiquement l'état des dispositifs d'activation (130, 140) et, lors de l'interrogation par l'unité de commande électronique (110), envoie les informations relatives à l'état des dispositifs d'activation (130, 140) sur le BUS de communications (120).

7. Système pour l'activation de coussins gonflables selon la revendication 6, **caractérisé en ce que** l'unité centrale (110) est également configurée pour :
- enregistrer les informations relatives à chaque unité locale (100) à des fins de diagnostic,
- gérer les capteurs (20a, 20b, 20c et 20d) impliqués dans la détection d'une collision,
- exécuter un algorithme relatif à l'événement "collision",
- gérer les communications avec les autres unités de commande internes (160) présentes dans l'architecture du système, et
- fournir l'alimentation à chaque unité locale (100), même en cas de basse énergie.

8. Système pour l'activation de coussins gonflables selon la revendication 6 ou la revendication 7, **caractérisé en ce que** chaque unité locale (100) est également configurée pour :
- communiquer des données à l'unité de commande électronique (110) lorsqu'elle procède à une interrogation de l'unité locale (100),
- effectuer les diagnostics des dispositifs d'activation (130, 140) associés, et
- activer les dispositifs d'activation (130, 140) associés.
